# EUROPEAN PATENT APPLICATION

(11) **EP 1 241 193 A2**
(43) Date of publication of application: **18.09.2002**
(21) Application number: 02251747.8
(22) Date of filing: 12.03.2002
(51) Int. Cl.: C08F 220/12, C08F 220/34, C09D 11/00, B41M 1/00

(54) **Cationic colloidal dispersion polymers for ink jet coatings**

(30) Priority: 12.03.2001 US 803829
(71) Applicant: WESTVACO CORPORATION, Stamford, CT 06905 (US)
(72) Inventor: Hutter, Frederick G., Charleston South Carolina 29407 (US); Stebbins, Camille K., Charleston South Carolina 29407 (US)
(74) Representative: Lawrence, Malcolm Graham

(57) **Abstract**

This invention pertains to cationic acrylic colloidal dispersion polymers. More particularly, the invention pertains to the use of cationic acrylic colloidal dispersion polymer compositions to enhance the ink jet printability of coating formulations.

## Description

This invention pertains to cationic acrylic colloidal dispersion polymers. More particularly, the invention pertains to the use of cationic acrylic colloidal dispersion polymer compositions to enhance the ink jet printability of coating formulations.

Ink jet printing is widely used to print on a variety of substrates (including paper, textiles, and plastic films). These substrates are often coated with a material that enhances their receptivity for the ink jet ink. In the case of aqueous dye-based inks, which comprise the majority of inks currently used in ink jet printing, two properties are of paramount importance. The first is an affinity for water, as the coating must absorb a large amount of water from the ink in order to obtain a print that is dry to the touch in few seconds. Ink jet ink formulations often contain over 90% water. Furthermore, the coating must maintain its physical integrity while absorbing all of this water. In other words, the receptive coating must be hydrophilic enough to absorb a large quantity of water without actually being water-soluble.

The second important property is dye fixation. The majority of aqueous ink jet inks are based on dyes rather than pigments. To obtain sharp prints with high color density, the dye molecules must be immobilized almost immediately upon contact of the ink with the substrate. Penetration of the dyes into the substrate will result in reduced color density, while lateral migration of the dye molecules will cause indistinctness in the image formed.

In order to obtain high water absorption, ink jet receptive coatings have traditionally been formulated with both hydrophilic pigments (such as silica or alumina) and hydrophilic binders. While the most commonly used hydrophilic binders are polyvinyl alcohol (PVOH) and polyvinylpyrrolidinone (PVP), other suitable natural and synthetic polymers are known in the art (e.g., gelatin, starch, polyethylene oxide (PEO), hydroxyethylcellulose, carboxymethylcellulose, and the like). Those polymers that contain hydroxyl groups (such as starch, PVOH, and PEO) are often cross-linked with a compound such as glyoxal or glutaraldehyde to render them water-insoluble while maintaining their hydrophilicity. Fully hydrolyzed polyvinyl alcohol is particularly useful because it can be dissolved in hot water and remains in solution when cooled to room temperature. When the PVOH is coated on a substrate and then dried, it will not readily redissolve in room-temperature water. However, a problem exists with use of PVOH in that PVOH has no dye trapping properties.

The dyes that are commonly employed in aqueous ink jet inks are anionic, containing sulfonic acid groups. Thus dye fixation is usually accomplished by the employment of cationic polymers, although some highly polar nonionic polymers (such as PVP and polyethyloxazoline) have a limited amount of dye fixing capability. These latter polymers fix dyes by dipolar interactions between their amide groups and the sulfonic acid groups of the dye molecules, while the cationic polymers work by the more efficient mechanism of salt formation.

The most widely used cationic dye fixative in ink jet receptive coatings is poly(diallyldimethylammonium chloride), although other water-soluble cationic polymers are known in the art. For example, U.S. 6,010,790 teaches the use of poly(vinylbenzylquaternayy ammonium salts). Other examples of water-soluble cationic polymers are cationic starch, cationic polyvinyl alcohol, guanidine-formaldehyde resins, epichlorohydrin-polyamine condensates, and water-soluble cationic acrylic resins.

However, a problem exists with the use of both soluble dipolar polymers and soluble cationic polymers in that, unless these polymers are cross-linked in some way, their presence has a detrimental effect on the water resistance of the ink jet prints.

As an alternative to water-soluble cationic resins, cationic acrylic or styrenic latices can be used as fixatives for anionic dyes in ink jet receptive coatings. These latices behave like plastic pigments. Attaching the positive charges to the surface of a pigment particle rather than to a soluble resin greatly enhances the water resistance of the ink jet prints. However, using substantial amounts of these cationic plastic pigments in a coating also results in rheological problems, which make the coatings difficult to employ on coating machinery. Furthermore, the level of cationic charge achievable with the cationic plastic pigment may not be high enough to achieve the desired level of dye fixing.

Anionic acrylic colloidal dispersion polymeric resins are widely used in the ink and coatings industries. Such polymers are manufactured by first making an acrylic latex that contains a substantial amount of an acidic monomer (such as methacrylic acid). Usually the amount of acidic monomer is sufficient to give the polymer an acid number of about 60 to about 120. The acidic functionality of the polymer is subsequently neutralized via the employment of a base (such as sodium hydroxide, potassium hydroxide, ammonia, or a water-soluble amine). This greatly enhances the hydrophilicity of the polymer, and the latex particles first swell and then lose their discreteness. While the resulting anionic acrylic colloidal dispersion polymeric resin product appears to be clear and homogeneous on a macroscopic basis, it is actually inhomogeneous on a molecular level, having some domains that are rich in hydrophobic moieties and other domains that are rich in hydrophilic ones. If a fugitive base is employed in the neutralization, these polymer dispersions dry to form water-insoluble films.

As will be appreciated from the specific Examples which follow hereinafter, the invention seeks to provide cationic acrylic colloidal dispersion polymer compositions which behave like traditional anionic dispersions, but with the opposite electrical charge, and the Examples illustrate the provision of cationic acrylic colloidal dispersion polymer compositions which exhibit properties that allow them to be useful in producing ink jet ink printing coating formulations.

The objects of this invention are met via the production of a new class of cationic polymers for ink jet receptive coatings that eliminate many of the problems involved in using cationic latices or soluble cationic polymers. These novel polymers are cationic acrylic colloidal dispersion polymer compositions.

As noted above, traditional anionic acrylic colloidal dispersion polymeric resins are produced by employing a base to neutralize the acidic functionality of the core polymer. In contrast, the cationic acrylic colloidal dispersion polymer compositions of the present invention may be described as the reverse image of such anionic dispersion resins noted in that the cationic polymer compositions contain basic functionalities which are subsequently neutralized with acid. These basic groups are provided by the employment of amine-functional monomers in the acrylic polymer. Such amine monomers may be any compound that contains both polymerizable ethylenic unsaturation and an amine group (which may be primary, secondary, or tertiary). Ink jet receptive coatings formulated with these cationic acrylic colloidal dispersion polymer compositions produce prints having enhanced definition and superior color density.

The cationic acrylic colloidal dispersion polymer compositions of the present invention comprise the reaction products produced by:
(A) reacting in a free radical polymerization reaction a mixture comprising:
   (1) about 1.0% to about 25.0% by total weight of the mixture of a member selected from the group consisting of amine-containing ethylenically unsaturated monomers and combinations thereof;
   (2) about 10.0% to about 50.0% by total weight of the mixture of a member selected from the group consisting of acrylic esters of alcohols containing from 1 to 22 carbon atoms, methacrylic esters of alcohols containing from 1 to 22 carbon atoms, styrene, substituted styrenes, acrylonitrile, methacrylonitrile, vinyl chloride, vinylidene chloride, vinyl ethers, vinyl esters, N-vinyl amides, and combinations thereof;
   (3) up to about 8.0% by total weight of the mixture of a member selected from the group consisting of ethylenically unsaturated monomers containing at least one quaternary ammonium group and combinations thereof;
   (4) up to about 8.0% by total weight of the mixture of a member selected from the group consisting of ethylenically unsaturated monomers containing at least one hydroxyl group and combinations thereof;
   (5) up to about 8.0% by total weight of the mixture of a member selected from the group consisting of N-hydroxymethyl acrylamide, N-hydroxymethyl methacrylamide, N-hydroxymethyl-substituted acrylamide, N-hydroxymethyl-substituted methacrylamide, and combinations thereof;
   (6) up to about 4.0% by total weight of the mixture of a chain transfer agent;
   (7) about 0.5% to about 8.0% by total weight of the mixture of a surfactant selected from the group consisting of nonionic surfactants, cationic surfactants, and combinations thereof;
   (8) a catalytic amount of polymerization initiator; and
   (9) the balance of the mixture being water; to produce an emulsion polymerization product having a solids content in the range of about 25.0% to about 50.0%; and
(B) adjusting said emulsion polymerization product to a pH in the range of about 3.5 to about 7.0 to produce the cationic acrylic colloidal dispersion polymer composition.

Preferred cationic acrylic colloidal dispersion polymer compositions comprise the reaction products produced by:
(A) reacting in a free radical polymerization reaction a mixture of monomers comprising:
   (1) about 4.0% to about 18.0% by total weight of the mixture of a member selected from the group consisting of amine-containing ethylenically unsaturated monomers and combinations thereof;
   (2) about 15.0% to about 40.0% by total weight of the mixture of a member selected from the group consisting of acrylic esters of alcohols containing from 1 to 22 carbon atoms, methacrylic esters of alcohols containing from 1 to 22 carbon atoms, styrene, substituted styrenes, acrylonitrile, methacrylonitrile, vinyl chloride, vinylidene chloride, vinyl ethers, vinyl esters, N-vinyl amides, and combinations thereof;
   (3) up to about 5.0% by total weight of the mixture of a member selected from the group consisting of ethylenically unsaturated monomers containing at least one quaternary ammonium group and combinations thereof;
   (4) up to about 5.0% by total weight of the mixture of a member selected from the group consisting of ethylenically unsaturated monomers containing at least one hydroxyl group and combinations thereof;
   (5) up to about 5.0% by total weight of the mixture of a member selected from the group consisting of N-hydroxymethyl acrylamide, N-hydroxymethyl methacrylamide, N-hydroxymethyl-substituted acrylamide, N-hydroxymethyl-substituted methacrylamide, and combinations thereof;
   (6) up to about 3.0% by total weight of the mixture of a chain transfer agent;
   (7) about 1.0% to about 5.0% by total weight of the mixture of a surfactant selected from the group consisting of nonionic surfactants, cationic surfactants, and combinations thereof;
   (8) a catalytic amount of polymerization initiator; and
   (9) the balance of the mixture being water; to produce an emulsion polymerization product having a solids content in the range of about 30.0% to about 45.0%; and
(B) adjusting said emulsion polymerization product to a pH in the range of about 4.0 to about 6.0 to produce the cationic acrylic colloidal dispersion polymer composition.

As noted above, the cationic acrylic colloidal dispersion polymer compositions of the present invention differ from traditional anionic dispersion resins in that the cationic compositions contain basic groups and are neutralized with acid. These basic groups are provided by the use of amine-functional monomers in the production of the acrylic polymer. Amine-containing ethylenically unsaturated monomers which are suitable for use in the present invention include those compounds containing both polymerizable ethylenic unsaturation and at least one amine group, which may be primary, secondary, or tertiary. Preferred amine-containing ethylenically unsaturated monomers include dimethylaminoethyl acrylate, dimethylaminoethyl methacrylate, diethylaminoethyl methacrylate, t-butylaminoethyl methacrylate, dimethylaminopropyl methacrylamide, allylamine, 2-vinylpyridine, 4-vinylpyridine, and the like. The amine-containing ethylenically unsaturated monomer comprises from about 1.0% to about 25.0%, preferably from about 4.0% to about 18.0%, by weight of the total mixture employed to produce the emulsion polymer.

In addition to amine-containing ethylenically unsaturated monomers, other functional monomers which contain reactive groups may be incorporated into the free radical polymerization reaction in order to tailor the resulting cationic acrylic colloidal dispersion polymer compositions. For example, the emulsion polymerization product (which is a latex) may be stabilized during the manufacturing process via the inclusion of up to about 8.0% (preferably up to about 5.0%) by weight of the total mixture of ethylenically unsaturated monomers containing at least one quaternary ammonium group. Quaternary ammonium monomers which are suitable for use in the present invention include those compounds which contain both polymerizable ethylenic unsaturation and at least one quaternary ammonium group. Preferred quaternary ammonium monomers include vinylbenzyltrimethylammonium chloride, methacryloyloxyethyltrimethylammonium chloride, methacrylamidopropyltrimethylammonium chloride and the like.

Where desired, the cationic acrylic colloidal dispersion polymer compositions may be given hydroxyl functionality via the inclusion of up to about 8.0% (preferably up to about 5.0%) by weight of the total mixture of hydroxyl-containing monomers. Hydroxyl-containing monomers which are suitable for use in the present invention include those monomers containing polymerizable ethyleneic unsaturation and at least one hydroxyl group. Preferred hydroxyl-containing monomers include hydroxyethyl acrylate, hydroxypropyl acrylate, hydroxybutyl acrylate, hydroxyethyl methacrylate, hydroxypropyl methacrylate, butanediol monovinyl ether, allyl alcohol, and the like. The presence of hydroxyl groups in the polymer allow it to be cross-linked with cross-linking agents that are conventionally used in coatings (such as aminoplast resins, glyoxal, glutaraldehyde, and the like).

Where desired, the cationic acrylic colloidal dispersion polymer compositions may also be made self cross-linkable via the inclusion of up to about 8.0% (preferably up to about 5.0%) by weight of the total mixture of a member selected from the group consisting of N-hydroxymethyl acrylamide, N-hydroxymethyl methacrylamide, N-hydroxymethyl-substituted acrylamide, N-hydroxymethyl-substituted methacrylamide, and combinations thereof.
It will be appreciated that the optional inclusion in the polymersiation reaction mixture subjected to free radical polymerisation of various acrylamide derivatives is contemplated by the invention. Specifically, the invention contemplates the inclusion of one or both of N-hydroxymethyl acrylamide and N-hydroxymethyl methacrylamide. However, N-hydroxymethyl derivatives of substituted acrylamide derivatives more generally are envisaged within the general formula: 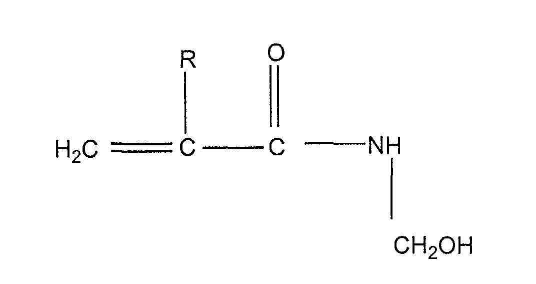 wherein R is hydrogen or C₁-C₄ alkyl (e.g. methyl).

The remaining monomer component of the mixture may be any non-functional monomers which are customarily employed in the manufacture of acrylic latices. That is, from about 10.0% to about 50.0% (preferably from about 15.0% to about 40.0%) by total weight of the mixture is comprised of a member selected from the group consisting of acrylic esters of alcohols containing from 1 to 22 carbon atoms, methacrylic esters of alcohols containing from 1 to 22 carbon atoms, styrene, substituted styrenes, acrylonitrile, methacrylonitrile, vinyl chloride, vinylidene chloride, vinyl ethers, vinyl esters, N-vinyl amides, and combinations thereof.

Where desired, up to about 4.0% (preferably up to about 3.0%) by total weight of the mixture of a chain transfer agent may be employed in the polymerization reaction in order to lower the molecular weight of the emulsion polymer. Preferred chain transfer agents include dodecyl mercaptan, 2-mercaptoethanol, alkyl mercaptopropionates, mercaptoacetic acid, mercaptopropionic acid, octyl mercaptan, and the like.

Surfactants suitable for use in the emulsion polymerization reaction include members selected from the group consisting of nonionic surfactants, cationic surfactants, and combinations thereof. Preferred nonionic surfactants include ethoxylated alkylphenols, ethoxylated fatty alcohols, ethylene oxide/propylene oxide block copolymers, and the like. Preferred cationic surfactants include, but are not limited to, the following: alkyltrimethylammonium salts wherein the alkyl group contains from 8 to 22 (preferably 12 to 18) carbon atoms and the counterion of the salt is a member selected from the group consisting of chloride, bromide, methylsulfate, and ethylsulfate; alkylbenzyldimethylammonium salts wherein the alkyl group contains from 8 to 22 (preferably 12 to 18) carbon atoms and the counterion of the salt is a member selected from the group consisting of chloride, bromide, methylsulfate, and ethylsulfate; and alkylpyridinium salts wherein the alkyl group contains from 8 to 22 (preferably 12 to 18) carbon atoms and the counterion of the salt is a member selected from the group consisting of chloride, bromide, methylsulfate, and ethylsulfate. The surfactant comprises from about 0.5% to about 8.0%, preferably from about 1.0% to about 5.0%, by weight of the total mixture employed to produce the emulsion polymer.

A catalytic amount of polymerization initiator is used in the free radical polymerization reaction. The amount of initiator employed commonly comprises from about 0.1% to about 3.0% (preferably from about 0.2% to about 2.0%) by weight of the total mixture used to produce the emulsion polymer. Traditional emulsion polymerization initiators (such as thermal initiators, redox initiators, and the like) are suitable for use in the emulsion polymerization reaction. Examples of suitable thermal initiators include, but are not limited to, the following: t-butyl hydroperoxide, di-t-butyl peroxide, benzoyl peroxide, benzoyl hydroperoxide, 2,4-dichlorobenzoyl peroxide, t-butyl peracetate, azobisisobutyronitrile, and isopropyl peroxycarbonate. Examples of suitable redox initiators include cumene hydroperoxide-sodium metabisulfite, cumene hydroperoxide-iron (II) sulfate, and the like. Preferred initiators include water-soluble azo compounds (such as V-50 or VA-086 manufactured by Wako Chemicals).

Sufficient water is added to the mixture to produce an emulsion polymerization product (latex) having a solids content in the range of about 25.0% to about 50.0%. The preferred solids content for the emulsion polymerization product is in the range of about 30.0% to about 45.0%.

Neutralization of the initially formed amine-containing latex emulsion polymerization product to form the aqueous dispersion form of the polymer can be accomplished via the addition of mineral acids (such as nitric or hydrochloric acids) or organic acids (such as water-soluble carboxylic acids or water-soluble sulfonic acids). It is preferred to use low molecular weight carboxylic acids such as acetic acid, propionic acid, glycolic acid, lactic acid, and the like for neutralization, as these acids will evaporate readily upon drying of the coating containing the polymer (thereby rendering the coating water-insoluble). Furthermore, carboxylic acids are less corrosive to coating equipment than are the stronger sulfonic and mineral acids.

For maximum effectiveness as a coating binder, the pH of the neutralized cationic acrylic colloidal dispersion polymer composition should be in the range of about 3.5 to about 7.0, preferably from 4.0 to about 6.0.

The cationic acrylic colloidal dispersion polymer compositions of the present invention are superior ink jet receptive coatings. Such ink jet receptive coatings can be employed to produce ink jet printable products via the process of coating a chosen substrate on at least one side with the ink jet receptive coating. Substrates which are suitable for use in producing such ink jet printable products include paper, paperboard, wood, plastic film, metal foil, textiles, and the like. Where desired, any of the pigments traditionally used in ink jet receptive coatings can be employed in the coating provided that the pigments are compatible with a cationic binder. Such pigments include, but are not limited to, the following: silica, alumina, plastic pigments, calcium carbonate, and kaolin clay.

Where desired, other cationic and nonionic binders can be used in conjunction with the cationic acrylic colloidal dispersion polymer compositions. These binders include, but are not limited to, the following: polyvinyl alcohol, cationic polyvinyl alcohol, polyvinylpyrrolidone, cationic vinylpyrrolidone copolymers, polyethyloxazoline, cationic water-soluble acrylic polymers, nonionic water-soluble acrylic polymers, starch, cationic starch, polyethylene glycol, methylcellulose, hydroxyethylcellulose, and mixtures thereof.

In cases where the cationic acrylic colloidal dispersion polymer contains hydroxyl functionality, cross-linkers that are traditionally used with hydroxyl-functional resins can be added to the coating. Such cross-linkers include urea-formaldehyde resins, melamine-formaldehyde resins, glyoxal, glutaraldehyde, titanates, zirconium salts, and the like.

As appreciated in the art, the exact components and properties of components desired for any coating application can vary and, therefore, routine experimentation may be required to determine the optional components and proportions of components for a given application and desired properties.

The following examples are provided to further illustrate the present invention and are not to be construed as limiting the invention in any manner.

### EXAMPLE 1

Cationic acrylic colloidal dispersion polymer compositions were prepared as follows. To a round-bottomed flask fitted with a mechanical stirrer, heating mantle, and inlet tubes for monomer feed was charged 425.2 parts of deionized water and 30.0 parts of Arquad C-50 (a 50% solution of dodecyltrimethylammonium chloride in isopropyl alcohol manufactured by Akzo). Two monomer feeds were then prepared. The first was a mixture of 180.0 parts of styrene and 90.0 parts of dimethylaminoethyl methacrylate (DMAEMA). The second monomer feed was 30.0 parts of Mhoromer BM-606 (a 75% solution of methacryloyloxyethyltrimethylammonium chloride in water manufactured by Röhm America, Inc.). Fifteen percent of each monomer feed was charged to the flask along with a solution of 6.0 parts of V-50 (an azo free radical initiator manufactured by Wako Chemicals) in 15 parts of deionized water. The contents of the flask were then heated to 60°C and the remainder of the two monomer feeds were added concurrently over three hours. When the monomer feed was complete, the temperature of the reaction was increased to 70°C and held for one hour. Then 0.45 part of t-butyl hydroperoxide and a solution of 0.88 part of erythorbic acid in 10.0 parts of deionized water were added, and the temperature was increased to 85°C and held for a further 2 hours. The resulting emulsion polymerization product (latex) had a solids content of 40.5%, a viscosity of 215 cP, a pH of 8.0, and an average particle size of 58 nm. The latex was converted into cationic acrylic colloidal dispersion polymer compositions via neutralization with acids. A substantial increase in viscosity accompanies this conversion as the latex particles swell and become more soluble. Neutralization with lactic acid resulted in compositions having viscosities of 595 cP at a pH of 6.6, 18,700 cP at a pH of 5.1, and 35,500 cP at a pH of 4.5. Neutralization with acetic acid resulted in compositions having viscosities of 650 cP at a pH of 6.6, 6700 cP at a pH of 5.1, and 320,000 cP at a pH of 4.5.

### EXAMPLE 2

Cationic acrylic colloidal dispersion polymer compositions may be prepared as follows. To a round-bottomed flask fitted with a mechanical stirrer, heating mantle, and inlet tubes for monomer feed was charged 425.2 parts of deionized water and 30.0 parts of Arquad C-50 (a 50% solution of dodecyltrimethylammonium chloride in isopropyl alcohol manufactured by Akzo). Two monomer feeds were then prepared. The first was a mixture of 132.0 parts of styrene and 90.0 parts of dimethylaminoethyl methacrylate (DMAEMA). The second monomer feed was 30.0 parts of Mhoromer BM-606 (a 75% solution of methacryloyloxyethyltrimethylammonium chloride in water manufactured by Röhm America, Inc.). Fifteen percent of each monomer feed was charged to the flask along with a solution of 6.0 parts of V-50 (an azo free radical initiator manufactured by Wako Chemicals) in 15 parts of deionized water. The contents of the flask were then heated to 60°C and the remainder of the two monomer feeds were added concurrently over three hours. When the monomer feed was complete, the temperature of the reaction was increased to 70°C and held for one hour. Then 0.45 part of t-butyl hydroperoxide and a solution of 0.88 part of erythorbic acid in 10.0 parts of deionized water were added, and the temperature was increased to 85°C and held for a further 2 hours. The resulting emulsion polymerization product (latex) had a solids content of 39.6%, a viscosity of 50 cP, a pH of 8.4, and an average particle size of 60 nm. The latex can be converted into cationic acrylic colloidal dispersion polymer compositions via neutralization with acids to a pH in the range of about 3.5 to about 6.5.

### EXAMPLE 3

Cationic acrylic colloidal dispersion polymer compositions containing hydroxyl functionality for cross-linking can be prepared as follows. To a round-bottomed flask fitted with a mechanical stirrer, heating mantle, and inlet tubes for monomer feed was charged 425.2 parts of deionized water and 30.0 parts of Arquad C-50 (a 50% solution of dodecyltrimethylammonium chloride in isopropyl alcohol manufactured by Akzo). Two monomer feeds were then prepared. The first was a mixture of 165.0 parts of styrene and 90.0 parts of dimethylaminoethyl methacrylate (DMAEMA). The second monomer feed was 15.0 parts of hydroxyethyl methacrylate and 30.0 parts of Mhoromer BM-606 (a 75% solution of methacryloyloxyethyltrimethylammonium chloride in water manufactured by Röhm America, Inc.). Fifteen percent of each monomer feed was charged to the flask along with a solution of 6.0 parts of V-50 (an azo free radical initiator manufactured by Wako Chemicals) in 15 parts of deionized water. The contents of the flask were then heated to 60°C and the remainder of the two monomer feeds were added concurrently over three hours. When the monomer feed was complete, the temperature of the reaction was increased to 70°C and held for one hour. Then 0.45 part of t-butyl hydroperoxide and a solution of 0.88 part of erythorbic acid in 10.0 parts of deionized water were added, and the temperature was increased to 85°C and held for a further 2 hours. The resulting emulsion polymerization product (latex) had a solids content of 40.3%, a viscosity of 370 cP, a pH of 8.1, and an average particle size of 97 nm. The latex can be converted into cationic acrylic colloidal dispersion polymer compositions via neutralization with acids to a pH in the range of about 3.5 to about 6.5.

### EXAMPLE 4

Self cross-linking cationic acrylic colloidal dispersion polymer compositions containing can be prepared as follows. To a round-bottomed flask fitted with a mechanical stirrer, heating mantle, and inlet tubes for monomer feed was charged 425.2 parts of deionized water and 30.0 parts of Arquad C-50 (a 50% solution of dodecyltrimethylammonium chloride in isopropyl alcohol manufactured by Akzo). Two monomer feeds were then prepared. The first was a mixture of 165.0 parts of styrene and 90.0 parts of dimethylaminoethyl methacrylate (DMAEMA). The second monomer feed was 15.0 parts of a 50% aqueous solution of N-methylolacrylamide and 30.0 parts of Mhoromer BM-606 (a 75% solution of methacryloyloxyethyltrimethylammonium chloride in water manufactured by Röhm America, Inc.). Fifteen percent of each monomer feed was charged to the flask along with a solution of 6.0 parts of V-50 (an azo free radical initiator manufactured by Wako Chemicals) in 15 parts of deionized water. The contents of the flask were then heated to 60°C and the remainder of the two monomer feeds were added concurrently over three hours. When the monomer feed was complete, the temperature of the reaction was increased to 70°C and held for one hour. Then 0.45 part of t-butyl hydroperoxide and a solution of 0.88 part of erythorbic acid in 10.0 parts of deionized water were added, and the temperature was increased to 85°C and held for a further 2 hours. The resulting emulsion polymerization product (latex) had a solids content of 39.2%, a viscosity of 117 cP, a pH of 8.1, and an average particle size of 65 nm. The latex can be converted into cationic acrylic colloidal dispersion polymer compositions via neutralization with acids to a pH in the range of about 3.5 to about 6.5.

### EXAMPLE 5

An ink jet receptive paper coating containing a cationic acrylic colloidal dispersion polymer composition was prepared as follows. To a round-bottomed flask fitted with a mechanical stirrer, heating mantle, and inlet tubes for monomer feed was charged 425.2 parts of deionized water and 30.0 parts of Arquad C-50 (a 50% solution of dodecyltrimethylammonium chloride in isopropyl alcohol manufactured by Akzo). Two monomer feeds were then prepared. The first was a mixture of 180.0 parts of styrene and 90.0 parts of dimethylaminoethyl methacrylate (DMAEMA). The second monomer feed was 30.0 parts of Mhoromer BM-606 (a 75% solution of methacryloyloxyethyltrimethylammonium chloride in water manufactured by Röhm America, Inc.). Fifteen percent of each monomer feed was charged to the flask along with a solution of 6.0 parts of V-50 (an azo free radical initiator manufactured by Wako Chemicals) in 15 parts of deionized water. The contents of the flask were then heated to 60°C and the remainder of the two monomer feeds were added concurrently over three hours. When the monomer feed was complete, the temperature of the reaction was increased to 70°C and held for one hour. Then 0.45 part of t-butyl hydroperoxide and a solution of 0.88 part of erythorbic acid in 10.0 parts of deionized water were added, and the temperature was increased to 85°C and held for a further 2 hours. The resulting emulsion polymerization product (latex) had a solids content of 40.5%, a viscosity of 215 cP, a pH of 8.0, and an average particle size of 58 nm. The latex was converted into cationic acrylic colloidal dispersion polymer compositions via neutralization with lactic acid to a pH of 5.0.

A coating was prepared by mixing together 60 parts on a dry basis of TRUDOT™ DPX-7817-83 (a cationic plastic pigment latex manufactured by Westvaco Corp.), 40 parts on a dry basis of CAB-O-SPERSE PG003 (a 40% aqueous dispersion of fumed alumina manufactured by Cabot Corp.), and 10 parts on a dry basis of the cationic acrylic colloidal dispersion polymer composition. The solids of the resulting ink jet receptive paper coating was adjusted to 30.4 weight-% with deionized water.

A traditional polyvinyl alcohol-based coating was produced as a comparative example. The above procedure was repeated except that the cationic colloidal dispersion polymer composition was replaced with 10 parts on a dry basis of AIRVOL 205 (a polyvinyl alcohol manufactured by Air Products, Inc.).

The cationic acrylic colloidal dispersion polymer composition coating and the coating of the comparative example were each applied to Hammermill Multipurpose paper using a No. 12 wire-wound rod. The coated sheets were then dried for 5 minutes at 110°C, and test prints were made on the dried sheets with black ink using an Epson 900 printer. The print made on the coating produced with the cationic polymer of the present invention showed much sharper definition and greater color density when compared with the print produced using the traditional polyvinyl alcohol-based coating.

Many modifications and variations of the present invention will be apparent to one of ordinary skill in the art in light of the above teachings.

## Claims

1. A cationic acrylic colloidal dispersion polymer composition comprising a reaction product obtainable by:-
(A) reacting in a free radical polymerisation reaction a mixture comprising the following components to produce an emulsion polymerisation product having a solids content in the range of about 25% to about 50%:-
(1) about 1% to about 25% by total weight of the mixture of one or more amine-containing ethylenically unsaturated monomers;
(2) about 10% to about 50% by total weight of the mixture of at least one further monomer, said further monomer(s) being one or more acrylic esters of an alcohol containing from 1 to 22 carbon atoms, one or more methacrylic esters of an alcohol containing from 1 to 22 carbon atoms, styrene, one or more substituted styrenes, acrylonitrile, methacrylonitrile, vinyl chloride, vinylidene chloride, one or more vinyl ethers, one or more vinyl esters and/or one or more N-vinyl amides;
(3) optionally, up to about 8% by total weight of the mixture of one or more ethylenically unsaturated monomers each containing at least one quaternary ammonium group;
(4) optionally, up to about 8% by total weight of the mixture of one or more ethylenically unsaturated monomers each containing at least one hydroxyl group;
(5) optionally, up to about 8% by total weight of the mixture of N-hydroxymethyl acrylamide and/or N-hydroxymethyl methacrylamide;
(6) optionally, up to about 4% by total weight of the mixture of at lest one chain transfer agent;
(7) about 0.5% to about 8% by total weight of the mixture of one or more nonionic surfactants and/or one or more cationic surfactants;
(8) a catalytic amount of one or more polymerisation initiators; and
(9) as the balance of the reaction mixture, water and
(B) adjusting said emulsion polymerisation product to a pH in the range from about 3.5 to approximate neutrality to produce the cationic acrylic colloidal dispersion polymer composition.

2. A composition as claimed in claim 1 wherein the mixture subjected to free radical polymerisation comprises the following components:-
(1) about 4% to about 18% by total weight of the mixture of one or more amine-containing ethylenically unsaturated monomers;
(2) about 15% to about 40% by total weight of the mixture of one or more acrylic esters of an alcohol containing from 1 to 22 carbon atoms, one or more methacrylic esters of an alcohol containing from 1 to 22 carbon atoms, styrene, one or more substituted styrenes, acrylonitrile, methacrylonitrile, vinyl chloride, vinylidene chloride, one or more vinyl - ethers, one or more vinyl esters, and/or one or more N-vinyl amides;
(3) optionally, up to about 5% by total weight of the mixture of one or more ethylenically unsaturated monomers each containing at least one quaternary ammonium group;
(4) optionally, up to about 5% by total weight of the mixture of one or more ethylenically unsaturated monomers each containing at least one hydroxyl group;
(5) optionally, up to about 5% by total weight of the mixture of N-hydroxymethyl acrylamide, and/or N-hydroxymethyl methacrylamide;
(6) optionally, up to about 3% by total weight of the mixture of a chain transfer agent;
(7) about 1% to about 5% by total weight of the mixture of one or more nonionic surfactants and/or one or more a cationic surfactants;
(8) a catalytic amount of polymerisation initiator; and
(9) as the balance of the reaction mixture, water.

3. A composition as claimed in Claim 1 or Claim 2 wherein the free radical polymerisation reaction produces an emulsion polymerisation product having solids content in the range of about 30% to about 45% and pH adjustment of said emulsion polymerisation product is carried out to provide a cationic acrylic colloidal dispersion polymer composition having a pH in the range from about 4 to about 6.

4. A composition as claimed in any preceding claim wherein the reaction mixture comprises, as amine-containing ethylenically unsaturated monomer, dimethylaminoethyl acrylate, dimethylaminoethyl methacrylate, diethylaminoethyl methacrylate, t-butylaminoethyl methacrylate, dimethylaminopropyl methacrylamide, allylamine, 2-vinylpyridine and/or 4-vinylpyridine.

5. A composition as claimed in any preceding claim wherein the reaction mixture comprises, as ethylenically unsaturated monomer containing at least one quaternary ammonium group, vinylbenzyltrimethylammonium chloride and/or methacryloyloxyethyltrimethylammonium chloride and/or methacrylamidopropyltrimethylammonium chloride.

6. A composition as claimed in any preceding claim wherein the reaction mixture comprises, as ethylenically unsaturated monomer containing at least one hydroxyl group, hydroxyethyl acrylate, hydroxypropyl acrylate, hydroxybutyl acrylate, hydroxyethyl methacrylate, hydroxypropyl methacrylate, butanediol monovinyl ether and/or allyl alcohol.

7. A composition as claimed in any preceding claim wherein the reaction mixture comprises, as chain transfer agent, dodecyl mercaptan, 2-mercaptoethanol, one or more alkyl mercaptopropionates, mercaptoacetic acid, mecaptopropionic acid and/or octyl mercaptan.

8. A composition as claimed in any preceding claim wherein the reaction mixture comprises, as nonionic surfactant, one or more ethoxylated alkylphenols, one or more ethoxylated fatty alcohols and/or one or more ethylene oxide/propylene oxide block copolymers.

9. A composition as claimed in any preceding claim wherein the reaction mixture comprises, as cationic surfactant, one or more alkyltrimethylammonium salts wherein the alkyl group contains from 8 to 22 carbon atoms and the counterion of the salt is a chloride, bromide, methylsulfate, or ethylsulfate ion; one or more alkylbenzyldimethylammonium salts wherein the alkyl group contains from 8 to 22 carbon atoms and the counterion of the salt is a chloride, bromide, methylsulfate or ethylsulfate ion; and/or one or more alkylpyridinium salts wherein the alkyl group contains from 8 to 22 carbon atoms and the counterion of the salt is a chloride, bromide, methylsulfate or ethylsulfate ion.

10. A composition as claimed in any preceding claim wherein the reaction mixture comprises one or more polymerisation initiators in an amount of from about 0.1% to about 3% by total weight of the mixture.

11. A composition as claimed in any preceding claim wherein the reaction mixture comprises, as polymerisation initiator, one or more thermal initiators and one/or more redox initiators.

12. A composition as claimed in claim 11 wherein the reaction mixture comprises, as thermal initiator, hydrogen peroxide, t-butyl hydroperoxide, di-t-butyl peroxide, benzoyl peroxide, benzoyl hydroperoxide, 2,4-dichlorobenzoyl peroxide, t-butyl peracetate, azobisisobutyronitrile and/or isopropyl peroxycarbonate.

13. A composition as claimed in claim 11 or claim 12 wherein the reaction mixture comprises, as redox initiator, cumene hydroperoxide-sodium metabisulfite and/or cumene hydroperoxide-iron (II) sulfate.

14. A composition as claimed in any preceding claim wherein the pH of the emulsion polymerisation product is adjusted by addition of one or more acidifiers.

15. A composition as claimed in Claim 14 wherein the polymerisation product is subjected to pH adjustment using, as an acidifier, one or more mineral acids, one or more water-soluble carboxylic acids and/or one or more water-soluble sulfonic acids.

16. A composition as claimed in Claim 15 wherein the polymerisation product is subject to pH adjustment using, as acidifier, acetic acid, propionic acid, glycolic acid and/or lactic acid.

17. A composition as claimed in any preceding claim which includes one or more pigments.

18. An ink jet receptive coating comprising a cationic acrylic colloidal dispersion polymer composition as claimed in any preceding claim.

19. An ink jet receptive coating as claimed in claim 18 which includes one or more pigments.

20. An ink jet receptive coating as claimed in claim 19 which includes, as pigment, silica, alumina, one or more plastic pigments, calcium carbonate and/or kaolin clay.

21. An ink jet printable product comprising a substrate coated on at least a part of at least one face with a coating as claimed in any one of claims 18 to 20.

22. An ink jet printable product as claimed in claim 21 wherein the substrate is a paper, paperboard, wood, plastics film, metal foil or textile substrate.

23. A process for producing a cationic acrylic colloidal dispersion polymer composition, the process comprising:-
(A) reacting in a free radical polymerisation reaction a mixture comprising the following components to produce an emulsion polymerisation product having a solids content in the range of about 25% to about 50%:-
(1) about 1% to about 25% by total weight of the mixture of one or more amine-containing ethylenically unsaturated monomers;
(2) about 10% to about 50% by total weight of the mixture of at least one further monomer, said further monomer(s) being one or more acrylic esters of an alcohol containing from 1 to 22 carbon atoms, a methacrylic ester of an alcohol containing from 1 to 22 carbon atoms, styrene, one or more substituted styrenes, acrylonitrile, methacrylonitrile, vinyl chloride, vinylidene chloride, one or more vinyl ethers, one or more vinyl esters and/or one or more N-vinyl amides;
(3) optionally, up to about 8% by total weight of the mixture of one or more ethylenically unsaturated monomers each containing at least one quaternary ammonium group;
(4) optionally, up to about 8% by total weight of the mixture of one or more ethylenically unsaturated monomers each containing at least one hydroxyl group;
(5) optionally, up to about 8% by total weight of the mixture of N-hydroxymethyl acrylamide and/or N-hydroxymethyl methacrylamide;
(6) optionally, up to about 4% by total weight of the mixture of at lest one chain transfer agent;
(7) about 0.5% to about 8% by total weight of the mixture of one or more nonionic surfactants and/or one or more cationic surfactants;
(8) a catalytic amount of one or more polymerisation initiators; and
(9) as the balance of the reaction mixture, water; and
(B) adjusting said emulsion polymerisation product to a pH in the range from about 3.5 to approximate neutrality to produce the cationic acrylic colloidal dispersion polymer composition.

24. A process as claimed in Claim 23 wherein the reaction mixture subjected to free radical polymerisation is defined in any one of Claims 2 to 13.

25. A process as claimed in Claim 23 or Claim 24 wherein the conduct of the process includes carrying out process steps as claimed in any one of Claims 3 and 13 to 16.

26. A printed product comprising a print substrate carrying adhered over at least one face thereof a continuous or discontinuous dry deposit of a coating composition which includes, prior to drying, a cationic acrylic colloidal dispersion polymer composition as claimed in any one of Claims 1 to 17, ink jetted print material being deposited upon at least some of said coating material deposit.

27. A printed product as claimed in Claim 26 wherein said coating composition comprises one or more other cationic polymer binders and/or one or more non-ionic binders.

28. A printed product as claimed in Claim 26 or Claim 27 wherein said coating composition comprises, as further polymer binder, polyvinyl alcohol, cationic polyvinyl alcohol, polyvinylpyrrolidone, one or more cationic vinylpyrrolidone copolymers, polyethyloxazoline, one or more cationic water-soluble acrylic polyers, one or more non-ionic water-soluble acrylic polymers, starch, cationic starch, polyethylene glycol, methylcellulose and/or hydroxyethylcellulose.

29. A polymer latex which is the polymerisation production precursor of an acrylic colloidal dispersion polymer composition as claimed in any one of Claims 1 to 17 obtainable by carrying out a free radical polymerisation reaction as defined in Claim 1.
